# EUROPEAN PATENT SPECIFICATION

(11) **EP 1 574 277 B1**
(45) Date of publication and mention of the grant of the patent: **23.02.2011**
(21) Application number: 04077679.1
(22) Date of filing: 27.09.2004
(51) Int. Cl.: B23K 9/133, B65H 51/14

(54) **A welding wire conveyor**
Schweissdrahtförderung
Transporteur de fil pour le soudage

(30) Priority: 25.09.2003 NL 1024377
(43) Date of publication of application: 14.09.2005
(73) Proprietor: Veldhoven, Robertus H., 2632 BA Nootdorp (NL); Brabander, Wilhelmus, Anthonius J., 2624 ZV delft (NL)
(72) Inventor: Veldhoven, Robertus H., 2632 BA Nootdorp (NL); Brabander, Wilhelmus, Anthonius J., 2624 ZV delft (NL)
(74) Representative: Boelsma, Gerben Harm

(56) References cited:
- WO-A-03/053594
- FR-A- 2 508 426
- GB-A- 1 193 434
- US-B1- 6 296 107

## Description

The invention relates to a welding wire advancing device of the type wherein the welding wire to be advanced is taken along between the active runs of two cooperating conveyor belts which are each disposed around rollers positioned at a device entrance and a device exit respectively and are movable in opposite directions and wherein auxiliary support rollers for the active belt runs are provided in the advancing path between the device entrance and exit.

Such a device is known from U.S. patent specification 2,160,048. It is said already in this patent document that the use of two cooperating conveyor belts (in this case in the form of V-belts of rubber) as an advancing device for a welding wire in an electric welding machine means an important improvement in comparison with the use of one or more pairs of advancing rollers that clamp the wire to be advanced. More specifically it is said that the wire to be advanced will be in contact with (the active runs of) the cooperating (V-)belts over a considerable length, so that no slippage will occur and an effective transfer to the welding spot is secured. Furthermore it is said that the risk for damage is reduced in the sense that such a device is suitable for uncoated welding wire material as well as for the more vulnerable coated welding wire material

With the well-known device the two active V-belt runs in the r advancing path between the device entrance and the device exit are each passing over only one single auxiliary support roller like the guide rollers at the device entrance and the device exit, with the two auxiliary support rollers positioned directly opposite to one another. This means that in fact merely in three points along the advancing path one may speak of contact with a "driving effect" between the welding wire and the two V-belts and that more specifically in the path sections between the guide rollers at the device entrance and the auxiliary rollers on one hand and between the auxiliary support rollers and the guide rollers at the device exit on the other hand the contact between V-belts and wire is too "superficial" for providing sufficient driving effect. Moreover, in each of said three points one can merely speak of "line contact". Consequently the well-known device is not suitable for drawing a welding wire - according to the requirements applying in modern automatic welding techniques, such as the welding automats operating with a protective gas atmosphere - at high speed from a wire supply and advancing it intact and at high speed to the welding spot.

The invention aims at providing an improved welding wire advancing device, that may be reliably used when applying the above mentioned modern, high-speed welding techniques and more particularly when use is to be made of welding wires of soft metal, such as aluminium, which easily gets damaged in the well-known welding wire advancing device.

Accordingly the invention provides a welding wire advancing device according to claim 1.

Due to the two active belt runs being forced to move according to a waving line between the successive auxiliary support rollers, the two active runs are in contact with each of the auxiliary rollers over a substantial part of the circumference of said rollers rather than according to a line only. This means that the forces with which the two active belt runs are pressed together are distributed more evenly over the length of the active belt runs. As a result of this the welding wire moves through the device like a wave, while the driving force applied to the wire is more evenly distributed over a wire length that corresponds with the length of the active belt runs.

Tests with the welding wire advancing device according to this invention have shown that e.g. an aluminium wire having a thickness of 0.5 mm may be drawn from a wire supply at high speed (of 20 m/min and more) without slippage and that in addition to this a certain straightening effect occurs, due to which the welding wire leaves the advancing device in a state which is not only completely intact but also completely straight. Moreover the offset positioning of the auxiliary support rollers allows the advance of welding wires of slightly different thicknesses without necessitating a mutual adjustment of the two conveyor belts

It is to be noted that in British patent specification 1,193,434 (corresponding with U.S. patent specification 4,179,056) a welding wire advancing device is disclosed, wherein the welding wire is also loaded in a more even, the wire "saving" manner. In this case the welding wire advancing device consists of a rotatebly mounted advancing pulley with a circumferential V-shaped groove. The welding wire obtained from a supply reel is introduced -at an inlet point - tangentially into the circumferential groove and guided along half of the circumference of the rotating pulley to a diametrically opposite outlet point.

Between the inlet and outlet points the wire is kept pressed in the V-groove by means of the active run of an endless conveyor belt that is caused to adjust itself to the circumference of the pulley. The conveyor belt is disposed about three rollers, two of which being positioned in the inlet and outlet points respectively, thereby touching said pulley, and the roller at the outlet point constituting the driving roller. The active conveyor belt run drives the advancing pulley. In these documents a slippage free advancement is pretended. However, in view of the fact that the engagement of the conveyor belt against the wire and the advancing pulley on the one hand and the contact between the advancing pulley and the wire on the other hand occur according to substantially different radii, a certain - although limited - slippage cannot be avoided. Consequently, with the device according to the British patent specification 1,193,434, there can be no mention of a precision advancement, such as with the welding wire device of this invention wherein the cooperating active runs of the two conveyor belts follow a rather straight, although wavy path. Moreover this prior art does not provide the straightening effect that is obtained by the present invention.

In view of the above mentioned US patent 2,160,048 it is still to be remarked that it is well-known per se to apply a plurality of auxiliary support rollers - rather than only a single one - for each of the active runs of two cooperating conveyor belts. An example is shown in FR-A-2508426, disclosing a device for advancing cylindrical rods. In this case, however, the auxiliary rollers are not positioned such that the rod to be advanced is forced to follow a wavy path.

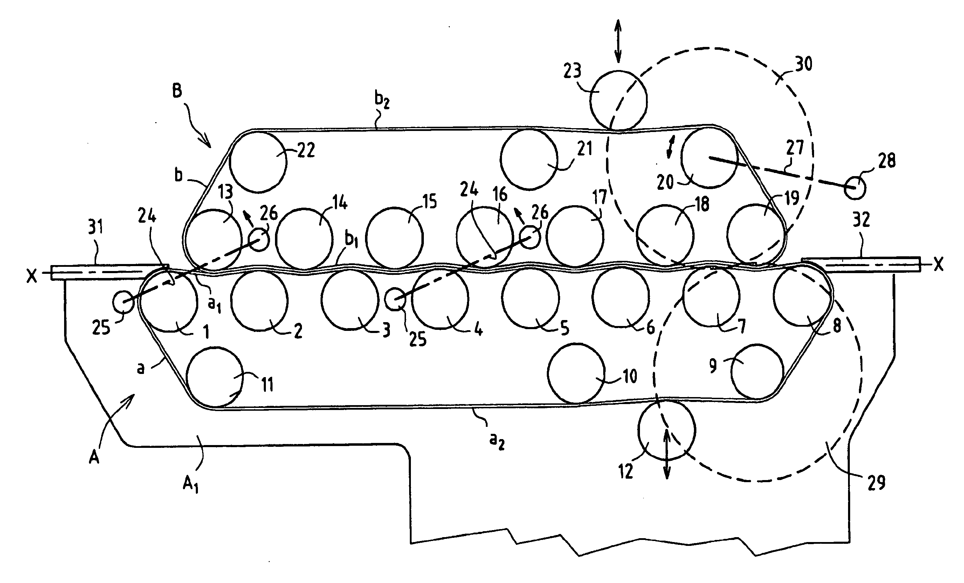

Further particulars of the invention will be hereinafter further described by way of example with reference to the accompanying drawing.

In the drawing there is shown a diagrammatic side elevational view of the welding wire advancing device according to this invention in its operational position.

The welding wire advancing device shown in the drawing consists generally of two superimposed belt conveyors A and B, the endless belts of which are preferably in the form of toothed belts and are indicated at a and b.

In the advancing position the active runs a1 and b1 respectively of the two belts are lying with their flat (i.e. toothfree) sides on top of one another.

The (toothed) belt a of the lower belt conveyor A is disposed around rollers 1-12, the cirumferences of which are toothed (not shown in the drawing) according to the toothing of the belt a. The rollers 1 and 8 of these rollers function to guide and deviate the active belt run a1 at the device entrance to the left in the drawing and at the device exit to the right in the drawing, whereas the (six) rollers 2-7 function as auxiliary support rollers for the active run a1. The rollers 9-11 guide the belt a in the so-called return run a2, with the roller 9 positioned adjacent to the exit of the device to the right in the drawing constituting the belt driving roller and being therefore connected to a drive motor (not shown in the drawing). Finally roller 12 is a tensioning roller and mounted for adjustment in the arrow direction.

A part of the frame of the lower belt conveyor is indicated at A1. In fact this is a backward frame wall or support plate, in which the rollers 1-11 are journalled at their backwardly directed ends and by means of which the tensioning roller 12 is rotatably and (in the arrow direction) adjustably supported.

The frame wall A1 extends with its upper end preferably just under the level of the operative belt run a1.

A similar frame wall deliminates the belt conveyor A on the front side and is connected to the framewall A1 by means of spacers not shown in the drawing. For sake of clarity however, this front frame wall is not shown. It is in such a front frame wall that the rollers 1-11 are journalled at their forwardly directed ends.

The (toothed) belt b of the upper belt conveyor B is disposed around rollers 13-22, the circumferences of which are toothed according to the toothing of the belt b. The rollers 13 and 19 of these rollers function to guide and deviate the active belt run b1 at the the device entrance to the left in the drawing and at the device exit to the right in the drawing, whereas the (five) rollers 14-18 function as auxiliary rollers for the active belt run b1. The rollers 20-22 guide the (toothed) belt b in the returning belt run b2, with the roller 20 positioned adjacent to the exit of the advancing device to the right in the drawing constituting the driving roller for the belt b.

In a similar way as with the lower belt conveyor A the belt b and the rollers 13-23 are mounted within the space between frame walls that are kept spaced by spacing members (not shown in the drawing for reasons of clarity.)

The mutual spacings between the rollers 1-8 along the active belt run a1 of the lower belt conveyor A are somewhat smaller than the roller diameter (e.g. 13 mm in case of a roller diameter om 22 mm) whereas the rollers along the active belt run b1 of the upper belt conveyor have an equal diameter and an equal mutual spacing.

In the advancing position (shown in the drawing) the rollers 13-19 of the upper belt conveyor B are disposed offset relative to the rollers 1-8 of the lower belt conveyor A as seen in the direction of movement X-X, such that each of the rollers 13-19 extend - to some extent - midway into the respective underlying intermediary spaces, as a result of which the mutually contacting active belt runs a1 and b1 follow a wavy path around the succesive rollers and the contacting pressure between the two active runs a1 and b1 will be more evenly distributed across the advancing path.

The two belt conveyors A and B are held in their mutual positions (i.e. active positions) shown in the drawing by means of two parallel hinged rods of equal lenghts, which are diagrammatically shown in the drawing and are represented by the dash-dotted lines 24. The hinged rods 24 are disposed e.g. on the side of the welding wire advancing device that is turned away from the plane of drawing where they are pivotally mounted - about pivot points 25 and 26 - to the back frame wall (not shown) of the upper belt conveyor B. A desired pressure can be maintained by means of an adjustable tensioning device (e.g. a tensioning rod), which removably connects the two frames to one another and has a working line that extends about perpendicularly to the shown position of the hinged rods 24.

In the advancing position the roller 20 driving the belt b is drivingly coupled to the driving roller 9 of the belt a through two equal gears 29 and 30 that are fixedly connected to roller 9 and roller 20 respectively

By causing the hinged rods 24 to swing - in the arrow direction - from the slightly inclined position shown in the drawing into a position at a larger angle of inclination, the upper belt conveyor B will move upwardly in parallel relative to the lower belt conveyor A. This brings the welding wire advancing device in an opened position in which the welding wire, that is drawn from a supply of welding wire, can be simply put ready for advancement on the active belt run a1 of the lower belt conveyor via the guide tube at the device entrance to the left in the drawing.

Because of the roller 20 with the gear 30 being positioned offset relative to the drive roller 9 with the gear 29 as shown in the drawing, the gear 30 will readily disengage from the gear 29 when the device is moved into the opened position. In reverse order, when the device is moved again into the closed position, the engagement of said gear will be smoothly restored. In this connection it is to be noted that the roller 20 with the gear 30 is rotatably mounted to the free end of a lever 27, which is mounted for rotation about a fixed point 28 of the frame of the upper belt conveyor B and is represented by a dash-dotted line. This secures the optimal mesh of the two gears 29 and 30, independently of the desired pressure of the two belt conveyors.

In operation, the welding wire to be advanced, which has been previously put into place in the above manner, will adjust itself to the wavy form of the two superimposed active runs a1 and b1 and move through the device like a running wave, while at the exit of the device, to the right in the drawing, the wire will leave the guide tube 32 as a completely straight wire which is capable of covering the (sometimes many meters long) path to the electric contact tube at the end of a welding torch without any further driving support.

The quality of the grip of the synchronously moving active runs onto the welding wire is such that at any time a reversal of the direction of rotation of the drive motor enables to retract the wire (for a short while), e.g. for the purpose of drawing an electric arc.

In the above discussed prior art it has already been remarked that the welding wire advancing elements must be formed of electrically insulating material in order to be capable of withstanding the electric tensions to which the welding wire is subjected during its advancement to the welding torch.

Preferably, with the welding wire advancing device according to the invention not only the parts, such as the guiding tubes 31 and 32, that are directly contacted by the welding wire, but at least also the rims of the various rollers are made af a suitable insulating plastic material in order to obtain a disruptive strenght that allows high frequency operation.

Finally it is to be noted that the term " welding wire" used hereinabove and in the claims has to be understood in a broad sense as far as the nature of and the cross section of the wire material is concerned. In addition to a circular wire shape, the term is intended to cover a ribbon shape as well.

## Claims

1. Welding wire advancing device of the type, wherein the welding wire to be advanced is taken along between the active runs (a1;b1) of two cooperating conveyor belts which conveyor belts are each disposed around guide rollers (1, 8; 13, 19) positioned at a device entrance and a device exit respectively, and driven in opposite directions a plurality of auxiliary support rollers (2-7 ;14-18) for each of the active conveyor belt runs (a1;b1) being provided in the advancing path between the device entrance and exit, with the auxiliary support rollers (2-7) for the active belt run (a1) of one conveyor belt (A) positioned as seen in the advance direction offset relative to the positions of the auxiliary support rollers (14-18) for the active belt run (b1) of the other conveyor belt (B), and wherein the conveyor belts (A;B) are movable between an inactive position in which the active belt runs (a1,b1) are disengaged from each other, and an active position in which each roller of said plurality of auxiliary support rollers (2-7) for the active belt run (a1) of said one conveyor belt (A) extends into the space between two successive rollers or into the space behind or in front of a roller of said plurality of auxiliary support rollers (14-18) for the active belt run (b1) of said other conveyor belt (B) to such an extent that the two active belt runs (a1;b1), with the welding wire therebetween, are forced to move according to a waving line between the two pluralities of auxiliary support rollers (2-7;14-18).

2. A welding wire advancing device according to claim 1, wherein said two conveyor belts (A;B) and the associated guide rollers (1,8; 13,9) and auxiliary rollers (2-7; 14-18) respectively are enclosed in superimposed frames, which are connected by a couple of parallel hinge rods (24) and thereby movable between a closed advancing position and an opened inactive position, which positions correspond with the active and inactive positions respectively of the two conveyor belts (A:B).

## Patentansprüche

1. Schweissdrahtförderer der Art, wobei der zu fördernde Draht mitgenommen wird zwischen den wirksamen Teilen (a₁; b₁) zweier zusammenarbeitenden Förderbände, welche Förderbände jeweils um bei einem Förderereingang bzw. bei einem Fördererausgang angeordnete Führungsrollen (1, 8; 13, 9) geführt sind und in entgegengesetzten Richtungen angetrieben werden, wobei mehrere zusätzliche Stützrollen (2-7; 14-18) für jeden der wirksamen Bandteile (a₁; b₁) in der Förderbahn zwisschen dem Fördererausgang und Ausgang vorgesehen sind, und die zusätzlichen Stützrollen (2-7) für den wirksamen Bandteil (a₁) des einen Förderbandes (A) - in der Förderrichtung gesehen - verschoben liegen in Bezug auf die Lagen der zusätzlichen Stützrollen (14-18) für den wirksamen Bandteil (b₁) des anderen Förderbandes (B), und wobei die Förderbände (A; B) bewegbaar sind zwischen einer inaktiven Position, in welcher die wirksamen Bandteile (a₁; b₁) voneinder getrennt sind, und einer aktiven Position, in der jede Rolle der genannten mehreren zusätzlichen Stützrollen (2-7) für den wirksamen Bandteil (a₁) des einen Förderbandes (A) in den Zwischenraum zwischen zwei aufeinanderfolgenden Rollen, oder in den Raum hinter oder vor einer Rolle der genannten mehreren zusätzlichen Stützrollen (14-18) für den wirksamen Bandteil (b₁) des anderen Förderband (B) hineinsteckt, und zwar dermassen, dass die beiden wirksamen Bandteile (a₁; b₁), mit dem Schweissdraht dazwischen, gezwungen werden gemäss einer wellenförmigen Linie zwischen den beiden genannten mehreren zusätzlichen Stützrollen (2-7; 14-18) zu bewegen.

2. Schweissdrahtförderer nach Anspruch 1, wobei die beiden Förderbände (A; B) und die dazugehörigen Führungsrollen (1, 8; 13, 9) bzw. zusätzlichen Stützrollen (2-7; 14-18) in übereinander liegenden Rahmen untergebracht sind, welche mittels eines Satzes paralleler Hebel (24) miteinander verbunden sind zwischen einer geschlossen Förderposition und einer offenen inaktiven Position, welche Positionen den aktiven und inaktiven Positionen der beiden Förderbände (A; B) entsprechen.

## Revendications

1. Transporteur de fil pour soudage du type, dans lequel le fil pour soudage a transporter est mené entre les parties actives (a1; b1) de deux convoyeurs cooperatives, lesquels sont chacun disposé autour de rouleaux de guidage (1, 8 ; 13, 19) respectivement positionnés a une entrée du transporteur et une sortie du transporteur et actionnés dans des directions opposées, une pluralité de rouleaux de support auxilliaires (2-7; 14-18) pour chacune des parties actives (a1, b1) étant prévue dans le trajet de transport entre l' entrée et la sortie du transporteur, avec les rouleaux de support auxilliaires (2-7) pour la partie active (a1) d' un convoyeur (A) positionnés, vue dans la direction de transport, relativement décalés par rapport aux positions des rouleaux de support auxilliaires (14-18) pour la partie active (b1) de l'autre convoyeur (B), et dans lequel les convoyeurs (A; B) sont mobiles entre une position inactive, dans laquelle les parties actives (a1, b1) sont dégagées l'une de l'autre, et une position active dans laquelle chaque rouleau de la pluralité des rouleaux de support auxilliaires (2-7) pour la partie active (a1) d'un convoyeur (A) s'étend dans l'espace entre deux rouleaux successifs ou dans l'espace derriere ou devant un rouleau de la pluralité des rouleaux de support auxilliaires (14-18) pour la partie active (b1) de l'autre convoyeur (B) de telle manière que les deux parties actives (a1; b1), avec le fil pour soudage entre les deux, sont forcées de se deplacer suivant une ligne ondulante entre les deux pluralités des rouleaux de support auxilliaires (2-7; 14-18).

2. Transporteur de fil pour soudage selon la revendication 1, dans lequel les deux convoyeurs (A, B) et les rouleaux de guidage (1, 8; 13, 9) correspondants et les rouleaux de support auxilliaires (2-7; 14-18) sont respectivement enfermés dans des châssis superposés, qui sont connectés par un couple de leviers (24) parallels et par conséquence mobiles entre une position de transport fermée et une position inactive ouverte, quelles positions correspondent respectivement avec les positions actives et inactives des deux convoyeurs (A; B).
